(19) Europäisches Patentamt
European Patent Office
Office européen des brevets

(11) EP 1 927 119 B1

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(21) Anmeldenummer: **06777154.3**

(22) Anmeldetag: **02.09.2006**

(51) Int Cl.:
***H01G 9/15*** *(2006.01)*

(86) Internationale Anmeldenummer:
**PCT/EP2006/008584**

(87) Internationale Veröffentlichungsnummer:
**WO 2007/031207 (22.03.2007 Gazette 2007/12)**

(54) **VERFAHREN ZUR HERSTELLUNG VON ELEKTROLYTKONDENSATOREN MIT HOHER NENNSPANNUNG**

METHOD FOR PRODUCING ELECTROLYTE CAPACITORS HAVING HIGH NOMINAL VOLTAGE

PROCEDE DE PRODUCTION DE CONDENSATEURS ELECTROLYTIQUES A TENSION NOMINALE ELEVEE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.09.2005 DE 102005043829**

(43) Veröffentlichungstag der Anmeldung:
**04.06.2008 Patentblatt 2008/23**

(60) Teilanmeldung:
**10012039.3 / 2 290 665**

(73) Patentinhaber: **Heraeus Precious Metals GmbH & Co. KG**
**63450 Hanau (DE)**

(72) Erfinder:
- **MERKER, Udo**
**51105 Köln (DE)**
- **LÖVENICH, Wilfried**
**51649 Bergisch-Gladbach (DE)**
- **WUSSOW, Klaus**
**57250 Netphen (DE)**

(74) Vertreter: **Herzog, Martin et al**
**Herzog Fiesser & Partner**
**Patentanwälte**
**Immermannstrasse 40**
**40210 Düsseldorf (DE)**

(56) Entgegenhaltungen:
**EP-A- 1 498 920**
**WO-A2-02/37536**
**US-A- 5 300 575**
**US-A- 5 567 209**
**US-B1- 6 361 572**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zur Herstellung von Elektrolytkondensatoren mit niedrigem äquivalenten Serienwiderstand und niedrigem Reststrom für hohe Nennspannungen, nach diesem Verfahren hergestellte Elektrolytkondensatoren sowie die Verwendung solcher Elektrolytkondensatoren.

Ein handelsüblicher Feststoffelektrolytkondensator besteht in der Regel aus einer porösen Metallelektrode, einer auf der Metalloberfläche befindlichen Oxidschicht, einem elektrisch leitfähigen Feststoff, der in die poröse Struktur eingebracht wird, einer äußeren Elektrode (Kontaktierung), wie z.B. einer Silberschicht, sowie weiteren elektrischen Kontakten und einer Verkapselung. Ein Verfahren zur Herstellung eines Ferststaffelektrolytkondensators mit den Merkmaten des Oberbegriff des Anspruchs 1 ist aus EP 1 498 920 bekannt.

Beispiele für Feststoffelektrolytkondensatoren sind Tantal-, Aluminium, Niob- und Nioboxidkondensatoren mit Ladungstransferkomplexen, Braunstein- oder Polymer-Feststoffelektrolyten. Die Verwendung poröser Körper hat den Vorteil, dass sich aufgrund der großen Oberfläche eine sehr hohe Kapazitätsdichte, d.h. eine hohe elektrische Kapazität auf kleinem Raum, erzielen lässt.

Besonders geeignet als Feststoffelektrolyte sind aufgrund ihrer hohen elektrischen Leitfähigkeit $\pi$-konjugierte Polymere. $\pi$-konjugierte Polymere werden auch als leitfähige Polymere oder als synthetische Metalle bezeichnet. Sie gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte $\pi$-konjugierte Polymere sind Polypyrrole, Polythiophene, Polyaniline, Polyacetylene, Polyphenylene und Poly(p-phenylen-vinylene), wobei ein besonders wichtiges und technisch genutztes Polythiophen das Poly-3,4-(ethylen-1,2-dioxy)thiophen, oft auch als Poly(3,4-ethylendioxythiophen) bezeichnet, ist, da es in seiner oxidierten Form eine sehr hohe Leitfähigkeit aufweist.

Die technische Entwicklung in der Elektronik erfordert zunehmend Feststoffelektrolytkondensatoren mit sehr niedrigen Äquivalenten Serienwiderständen (ESR). Grund dafür sind beispielsweise fallende Logikspannungen, eine höhere Integrationsdichte und steigende Taktfrequenzen in integrierten Schaltkreisen. Ferner senkt ein niedriger ESR auch den Energieverbrauch, was besonders für mobile, batteriebetriebene Anwendungen vorteilhaft ist. Es besteht daher der Wunsch, den ESR von Feststoffelektrolytkondensatoren möglichst weit zu reduzieren.

In der europäischen Patentschrift EP-A 340 512 wird die Herstellung eines Feststoffelektrolyten aus 3,4-Ethylen-1,2-dioxythiophen und die Verwendung seines durch oxidative Polymerisation hergestellten, kationischen Polymeren als Feststoffelektrolyt in Elektrolytkondensatoren beschrieben. Poly(3,4-ethylendioxythiophen) als Ersatz von Mangandioxid oder von Ladungs-transferkomplexen in Feststoffelektrolytkondensatoren senkt aufgrund der höheren elektrischen Leitfähigkeit den äquivalenten Serienwiderstand des Kondensators und verbessert das Frequenzverhalten.

Nachteilig an diesem Verfahren und ähnlichen Verfahren, die eine chemische in-situ Polymerisation verwenden, ist, dass sich damit keine Feststoffelektrolytkondensatoren mit niedrigen ESR und niedrigen Reststrom herstellen lassen, die eine hohe Nennspannung besitzen.

Nach Abscheiden des Polymer-Feststoffelektrolyten muss die Oxidschicht des Kondensators üblicherweise reformiert werden, um niedrige Restströme zu erreichen, wie z.B. in EP-A 899 757 beschrieben. Dazu wird der Kondensator in einen Elektrolyten getränkt und einer elektrischen Spannung ausgesetzt, die der Anodisierspannung des Oxidfilms entspricht.

Bei der Herstellung von Polymer-Elektrolytkondensatoren mit Nennspannungen ab 16 V wird die Reformierung der Oxidschicht mit zunehmender Nennspannung schwieriger und ist für Nennspannungen ab 25 V nicht mehr durchführbar, ohne den ESR gravierend zu verschlechtern. Als Ausweg bleibt eine schwächere Reformierung, d.h. eine Reformierung weit unterhalb der Anodisierspannung. Dies führt jedoch zu einer verringerten Zuverlässigkeit der Kondensatoren.

Ein Maß für die Zuverlässigkeit ist die Durchbruchsspannung des Kondensators. Die Durchbruchsspannung ist die Spannung bei der das Dielektrikum (Oxidschicht) des Kondensators der elektrischen Feldstärke nicht mehr stand hält und es zu elektrischen Durchschlägen zwischen Anode und Kathode kommt, was zu einem Kurzschluss im Kondensator führt. Je höher die Durchbruchspannung ist, desto besser ist die Güte des Dielektrikums und desto zuverlässiger ist damit auch der Kondensator. Je höher die Durchbruchspannung des Kondensators ist, desto höher liegt die Nennspannung, bei der er eingesetzt werden kann.

Die Durchbruchsspannung liegt bei Polymer-Kondensatoren mit niedriger Nennspannung nahe der Anodisierspannung und damit weit oberhalb der Nennspannung, die typischerweise zwei- bis vierfach kleiner als die Anodisierspannung ist. Bei Polymer-Feststoffelektrolyt-Kondensatoren mit hoher Nennspannung fällt die Durchbruchsspannung jedoch aufgrund der oben beschriebenen Probleme bei der Reformierung deutlich unter die Anodisierspannung ab. Dadurch verringert sich die Zuverlässigkeit dieser Kondensatoren. Es ist daher wünschenswert, die Durchbruchspannung und damit die Zuverlässigkeit von Polymer-Feststoffelektrolyt-Kondensatoren zu steigern.

Zahlreiche Einsatzgebiete in der Elektronik, wie beispielsweise die Automobilelektronik oder die Spannungsfilterung in Netzteilen erfordern den Einsatz von Feststoffelektrolytkondensatoren mit hoher Nennspannung und niedrigem ESR und Reststrom bei einer hohen Zuverlässigkeit.

Es besteht somit Bedarf an geeigneten Verfahren zur Herstellung von Feststoffelektrolytkondensatoren mit niedrigem Äquivalenten Serienwiderstand (ESR) und niedrigem Reststrom, die eine hohe Nennspannung besitzen.

Die Aufgabe bestand daher darin, ein solches Verfahren und die damit verbesserten Kondensatoren bereitzustellen.

Überraschend wurde nun gefunden, dass sich bei der Verwendung von Dispersionen, enthaltend Teilchen eines elektrisch leitfähigen Polymers mit einem mittleren Durchmesser von 1 bis 100 nm, für die Bildung des Feststoffelektrolyten, solche Kondensatoren herstellen lassen.

Überraschend ist, dass bei Verwendung solcher Teilchen keine Reformierung des Oxidfilms notwendig ist und die entsprechenden Kondensatoren dennoch sehr niedrige Restströme aufweisen.

Gegenstand der vorliegenden Erfindung ist daher ein Verfahren mitden Merkmalen des Anspruchs 1. Das verfahren dient zur Herstellung eines Elektrolytkondensators, und ist wenigstens umfassend dass

a) ein poröser Elektrodenkörper (2) eines Elektrodenmaterials zur Bildung eines Dielektrikums (3), das die Oberfläche dieses Elektrodenmaterials bedeckt, anodisch oxidiert wird,

b) auf den porösen Körper, wenigstens umfassend
den porösen Elektrodenkörper (2) des Elektrodenmaterials und das Dielektrikum (3)
eine Dispersion A) aufgebracht wird,
die wenigstens Teilchen B) eines elektrisch leitfähigen Polymers und ein Dispersionsmittel D) enthält,

c) und zur Bildung eines Feststoffelektrolyten (4), der die Dielektrikumsoberfläche ganz oder teilweise bedeckt, das Dispersionmittel D) wenigstens teilweise entfernt und/oder ausgehärtet wird, und ist

dadurch gekennzeichnet, dass die maximale Anodisierspannung bei der anodischen Oxidation des porösen Elektrodenkörpers (2) größer 30 V beträgt und die Teilchen B) des leitfähigen Polymers in der Dispersion A) einen mittleren Durchmesser von 1 bis 100 nm haben.

Die Bestimmung des Durchmessers der Teilchen B) erfolgt über eine Ultrazentrifugenmessung. Das allgemeine Vorgehen ist in Colloid Polym. Sci. 267, 1113-1116 (1989) beschrieben. Bei Teilchen B), die in der Dispersion quellen, wird die Teilchengröße im gequollenen Zustand bestimmt. Eine Durchmesserverteilung der Teilchen B) bezieht sich auf eine Massenverteilung der Teilchen in der Dispersion in Abhängigkeit vom Teilchendurchmesser.

Die Teilchen B) des leitfähigen Polymers in der Dispersion A) haben in dem Verfahren bevorzugt einen mittleren Durchmesser von 1 bis 80 nm, besonders bevorzugt von 1 bis 50 nm, ganz besonders bevorzugt von 5 bis 40 nm.

Die Teilchen B) des leitfähigen Polymers in der Dispersion A) haben in dem Verfahren bevorzugt einen $d_{90}$ Wert der Durchmesserverteilung von kleiner 150 nm, besonders bevorzugt kleiner 100 nm, ganz besonders bevorzugt kleiner 80 nm und überaus bevorzugt kleiner 50 nm.

Die Teilchen B) des leitfähigen Polymers in der Dispersion A) haben in dem Verfahren bevorzugt einen $d_{10}$ Wert der Durchmesserverteilung größer 1 nm, besonders bevorzugt größer 3 nm, ganz besonders bevorzugt größer 5nm.

Der $d_{10}$ Wert der Durchmesserverteilung besagt dabei, dass 10% der Gesamtmasse aller Teilchen B) des leitfähigen Polymers in der Dispersion A) solchen Teilchen B) zugeordnet werden kann, die einen Durchmesser kleiner oder gleich dem $d_{10}$ Wert besitzen. Der $d_{90}$ Wert der Durchmesserverteilung besagt, dass 90% der Gesamtmasse aller Teilchen B) des leitfähigen Polymers in der Dispersion A) solchen Teilchen B) zugeordnet werden kann, die einen Durchmesser kleiner oder gleich dem $d_{90}$ Wert besitzen.

Bevorzugt werden Dispersionen A) eingesetzt, deren Filme im getrockneten Zustand eine spezifische Leitfähigkeit von größer 10 S/cm, besonders bevorzugt größer 20 S/cm, ganz besonders bevorzugt größer 50 S/cm, überaus bevorzugt größer 100 S/cm und einer bevorzugten Ausführungsform größer 200 S/cm aufweisen.

Bekanntermaßen können Metallverunreinigungen, insbesondere Übergangsmetalle, das Dielektrikum (Oxidfilm) im Kondensator schädigen. Um zu verhindern, dass solche Metallverunreinigungen die Zuverlässigkeit des Kondensators mindern, werden solche Dispersionen A) bevorzugt, die wenig Metallverunreinigungen enthalten.

Die Dispersion A) hat in dem Verfahren bevorzugt einen Gehalt an Metall-Kationen kleiner 5000 mg/kg, besonders bevorzugt kleiner 1000 mg/kg, ganz besonders bevorzugt kleiner 200 mg/kg.

Die Dispersion A) hat in dem Verfahren bevorzugt einen Gehalt an Übergangsmetallen kleiner 1000 mg/kg, besonders bevorzugt kleiner 100 mg/kg, ganz besonders bevorzugt kleiner 20 mg/kg. Die Dispersion A) hat in dem Verfahren bevorzugt einen Eisengehalt kleiner 1000 mg/kg, besonders bevorzugt kleiner 100 mg/kg, ganz besonders bevorzugt kleiner 20 mg/kg.

Die niedrigen Konzentrationen an Metallen in den Dispersionen haben den großen Vorteil, dass das Dielektrikum bei Bildung des Feststoffelektrolyten und im späteren Betrieb des Kondensators nicht geschädigt wird.

Das Elektrodenmaterial bildet im Elektrolytkondensator hergestellt nach dem erfindungsgemäßen Verfahren

einen porösen Körper mit großer Oberfläche, und liegt z.B. in Form eines porösen Sinterkörpers oder einer aufgerauten Folie vor. Im Folgenden wird dieser poröse Körper auch kurz als Elektrodenkörper bezeichnet.

Der mit einem Dielektrikum bedeckte Elektrodenkörper wird im Folgenden auch kurz als oxidierter Elektrodenkörper bezeichnet.

Der mit einem Dielektrikum sowie ganz oder teilweise mit einem Feststoffelektrolyten bedeckte Elektrodenkörper wird im Folgenden auch kurz als Kondensatorkörper bezeichnet.

Unter äußerer Oberfläche des Kondensatorkörpers werden die Außenflächen des Kondensatorkörpers verstanden.

Der Begriff Polymere umfasst im Sinne der Erfindung alle Verbindungen mit mehr als einer gleichen oder unterschiedlichen Wiederholungseinheit.

Unter leitfähigen Polymeren wird hier insbesondere die Verbindungsklasse der $\pi$-konjugierten Polymere verstanden, die nach Oxidation oder Reduktion eine elektrische Leitfähigkeit besitzen. Bevorzugt werden solche $\pi$-konjugierten Polymere unter leitfähigen Polymeren verstanden, die nach Oxidation elektrische Leitfähigkeit in der Größenordnung von mindestens $1 \mu S\ cm^{-1}$ besitzen.

Die Teilchen B) des elektrisch leitfähigen Polymers in der Dispersion A) enthalten bevorzugt wenigstens ein Polythiophen, Polypyrrol oder Polyanilin, die gegebenenfalls substituiert sind.

Besonders bevorzugt enthalten die Teilchen B) des elektrisch leitfähigen Polymers wenigstens ein Polythiophen mit wiederkehrenden Einheiten der allgemeinen Formel (I) oder der allgemeinen Formel (II) oder wiederkehrenden Einheiten der allgemeinen Formeln (I) und (II),

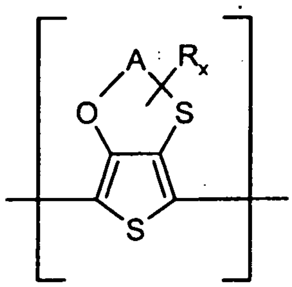 (I) 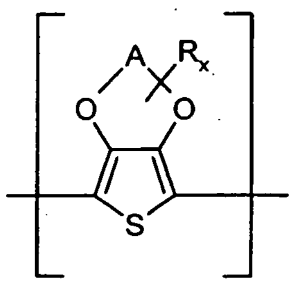 (II)

worin

A für einen gegebenenfalls substituierten $C_1$-$C_5$-Alkylenrest steht,

R für einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,

x für eine ganze Zahl von 0 bis 8 steht und

für den Fall, dass mehrere Reste R an A gebunden sind, diese gleich oder unterschiedlich sein können.

Die allgemeinen Formeln (I) und (II) sind so zu verstehen, dass x Substituenten R an den Alkylenrest A gebunden sein können.

Besonders bevorzugt sind Polythiophene mit wiederkehrenden Einheiten der allgemeinen Formel (I) oder (II) oder wiederkehrenden Einheiten der allgemeinen Formel (I) und (II), worin A für einen gegebenenfalls substituierten $C_2$-$C_3$-Alkylenrest und x für 0 oder 1 steht.

Ganz besonders bevorzugt als leitfähiges Polymer des Feststoffelektrolyten ist Poly(3,4-ethylendioxythiophen), das gegebenenfalls substituiert ist.

Unter dem Präfix Poly- ist im Rahmen der Erfindung zu verstehen, dass mehr als eine gleiche oder verschiedene wiederkehrende Einheit im Polymeren bzw. Polythiophen enthalten ist. Die Polythiophene enthalten insgesamt n wiederkehrende Einheiten der allgemeinen Formel (I) oder der allgemeinen Formel (II) oder der allgemeinen Formeln (I) und (II), wobei n eine ganze Zahl von 2 bis 2000, bevorzugt 2 bis 100, ist. Die wiederkehrenden Einheiten der allgemeinen Formel (I) und/oder (II) können innerhalb eines Polythiophens jeweils gleich oder verschieden sein. Bevorzugt sind Polythiophene mit jeweils gleichen wiederkehrenden Einheiten der allgemeinen Formel(n) (I) oder (II) oder (I) und (II).

An den Endgruppen tragen die Polythiophene bevorzugt jeweils H.

$C_1$-$C_5$-Alkylenreste A sind im Rahmen der Erfindung bevorzugt Methylen, Ethylen, n-Propylen, n-Butylen oder

n-Pentylen. $C_1$-$C_{18}$-Alkyl R stehen bevorzugt für lineare oder verzweigte $C_1$-$C_{18}$-Alkylreste wie Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, $C_5$-$C_{12}$-Cycloalkylreste R stehen beispielsweise für Cyclopentyl, Cyclohexyl, Cycloheptyl, Cyclooctyl, Cyclononyl oder Cyclodecyl, $C_5$-$C_{14}$-Arylreste R stehen beispielsweise für Phenyl oder Naphthyl, und $C_7$-$C_{18}$-Aralkylreste R beispielsweise für Benzyl, o-, m-, p-Tolyl, 2,3-, 2,4-, 2,5-, 2,6-, 3,4-, 3,5-Xylyl oder Mesityl. Die vorangehende Aufzählung dient der beispielhaften Erläuterung der Erfindung und ist nicht als abschließend zu betrachten.

Als gegebenenfalls weitere Substituenten der Reste A und/oder der Reste R kommen im Rahmen der Erfindung zahlreiche organische Gruppen in Frage, beispielsweise Alkyl-, Cycloalkyl-, Aryl-, Aralkyl-, Alkoxy, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Als Substituenten für Polyanilin oder Polypyrrol kommen beispielsweise die oben aufgeführten Reste A und R und/oder die weiteren Substituenten der Reste A und R in Frage. Bevorzugt sind unsubstituierte Polyaniline.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

Die als Feststoffelektrolyt in dem bevorzugten Verfahren eingesetzten Polythiophene können neutral oder kationisch sein. In bevorzugten Ausführungsformen sind sie kationisch, wobei sich "kationisch" nur auf die Ladungen bezieht, die auf der Polythiophenhauptkette sitzen. Je nach Substituent an den Resten R können die Polythiophene positive und negative Ladungen in der Struktureinheit tragen, wobei sich die positiven Ladungen auf der Polythiophenhauptkette und die negativen Ladungen gegebenenfalls an den durch Sulfonat- oder Carboxylatgruppen substituierten Resten R befinden. Dabei können die positiven Ladungen der Polythiophenhauptkette zum Teil oder vollständig durch die gegebenenfalls vorhandenen anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Gegenionen können monomere oder polymere Anionen, letztere im Folgenden auch als Polyanionen bezeichnet, sein.

Polymere Anionen sind gegenüber monomeren Anionen bevorzugt, da sie zur Filmbildung beitragen und aufgrund ihrer Größe zu thermisch stabileren elektrisch leitfähigen Filmen führen.

Polymere Anionen können hier beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Bevorzugt ist in den genannten Teilchen B) als polymeres Anion ein Anion einer polymeren Carbon- oder Sulfonsäure.

Besonders bevorzugt als polymeres Anion ist das Anion der Polystyrolsulfonsäure (PSS).

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Polymere(s) Anion(en) und elektrisch leitende Polymere können in der Dispersion A) insbesondere in einem Gewichtsverhältnis von 0,5:1 bis 50:1, bevorzugt von 1:1 bis 30:1, besonders bevorzugt 2:1 bis 20:1 enthalten sein. Das Gewicht der elektrisch leitende Polymere entspricht hierbei der Einwaage der eingesetzten Monomere unter Annahme, dass bei der Polymerisation vollständiger Umsatz erfolgt.

Als monomere Anionen dienen beispielsweise solche von $C_1$-$C_{20}$-Alkansulfonsäuren, wie der Methan-, Ethan-, Propan-, Butan- oder höheren Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen $C_1$-$C_{20}$-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure oder Tetrafluoroborate, Hexafluorophosphate, Perchlorate,

Hexafluoroantimonate, Hexafluoroarsenate oder Hexachloroantimonate.

Bevorzugt als monomere Anionen sind die Anionen der p-Toluolsulfonsäure, Methansulfonsäure oder Camphersulfonsäure.

Kationische Polythiophene, die zur Ladungskompensation Anionen als Gegenionen enthalten, werden in der Fachwelt auch oft als Polythiophen/(Poly-)Anion-Komplexe bezeichnet.

Die Dispersionen A) können ein oder mehrere Dispersionsmittel D) enthalten. Als Dispersionsmittel D) seien beispielsweise folgende Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Dispersionsmittel D) verwendet werden.

Bevorzugte Dispersionsmittel D) sind Wasser oder andere protische Lösungsmittel wie Alkohole, z.B. Methanol, Ethanol, i-Propanol und Butanol, sowie Mischungen von Wasser mit diesen Alkoholen, besonders bevorzugtes Lösungsmittel ist Wasser.

Die Dispersion A) kann außerdem weitere Komponenten enthalten wie oberflächenaktive Substanzen, z.B. ionische und nichtionische Tenside oder Haftvermittler enthalten, wie z.B. organofunktionelle Silane bzw. deren Hydrolysate, z.B. 3-Glycidoxypropyltrialkoxysilan, 3-Aminopropyltriethoxysilan, 3-Mercaptopropyl-trimethoxysilan, 3-Metacryloxypropyltrimethoxysilan, Vinyltrimethoxysilan oder Octyltriethoxysilan, Vernetzer wie Melaminverbindungen, verkappte Isocyanate, funktionelle Silane - z.B. Tetraethoxysilan, Alkoxysilanhydrolysate, z.B. auf Basis von Tetraethoxysilan, Epoxysilane wie 3-Glycidoxypropyltrialkoxysilan - Polyurethane, Polyacrylate oder Polyolefindispersionen.

Bevorzugt enthalten die Dispersionen A) weitere Additive, die die Leitfähigkeit steigern, wie z.B. ethergruppenhaltige Verbindungen, wie z.B. Tetrahydofuran, lactongruppenhaltige Verbindungen wie $\gamma$-Butyrolacton, $\gamma$-Valerolacton, amid- oder lactamgruppenhaltige Verbindungen wie Caprolactam, N-Methylcaprolactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon, Sulfone und Sulfoxide, wie z.B. Sulfolan (Tetramethylensulfon), Dimethylsulfoxid (DMSO), Zucker oder Zuckerderivate, wie z.B. Saccharose, Glucose, Fructose, Lactose, Zuckeralkohole wie z.B. Sorbit, Mannit, Furanderivate, wie z.B. 2- Furancarbonsäure, 3-Furancarbonsäure, und/oder Di- oder Polyalkohole, wie z.B. Ethylenglycol, Glycerin, Di- bzw. Triethylenglycol, Besonders bevorzugt werden als leitfähigkeitserhöhende Additive Tetrahydrofuran, N-Methylformamid, N-Methylpyrrolidon, Ethylenglycol, Dimethylsulfoxid oder Sorbit eingesetzt.

Die Dispersionen A) können außerdem ein oder mehrere in organischen Lösungsmitteln lösliche organische Bindemittel wie Polyvinylacetat, Polycarbonat, Polyvinylbutyral, Polyacrylsäureester, Polymethacrylsäureester, Polystyrol, Polyacrylnitril, Polyvinylchlorid, Polybutadien, Polyisopren, Polyether, Polyester, Silicone, Styrol/Acrylsäureester-, Vinylacetat/Acrylsäureester- und Ethylen/Vinylacetat-Copolymerisate oder wasserlösliche Bindemittel wie Polyvinylalkohole enthalten.

Die Dispersionen A) können einen pH Wert von 1 bis 14 haben, bevorzugt ist ein pH Wert von 1 bis 8. Für korrosionsempfindliche Dielektrika, wie beispielsweise Aluminiumoxide oder Nioboxide, werden Dispersionen bevorzugt mit einem pH Wert von 4 bis 8, um das Dielektrikum nicht zu schädigen.

Zur Einstellung des pH Werts können den Dispersionen beispielsweise Basen oder Säuren zugesetzt werden. Bevorzugt sind solche Zusätze, die die Filmbildung der Dispersionen nicht beeinträchtigen und bei höheren Temperaturen, z.B. Löttemperaturen, nicht flüchtig sind, sondern unter diesen Bedingungen im Feststoffelektrolyten verbleiben, wie z.B. die Basen 2-Dimethylaminoethanol, 2,2'-Iminodiethanol oder 2,2',2"-Nitrilotriethanol und die Säure Polystyrolsulfonsäure.

Die Viskosität der Dispersion A) kann je nach Aufbringungsart zwischen 0,1 und 500 mPa·s (gemessen bei 20°C und einer Scherrate von 100 $s^{-1}$) betragen. Bevorzugt beträgt die Viskosität 1 bis 200 mPa·s, besonders bevorzugt zwischen 1 bis 100 mPa·s, ganz besonders bevorzugt 3 bis 50 mPa·s.

Fig. 1 beschreibt eine schematische Darstellung des Aufbaus eines Feststoffelektrolytkondensators am Beispiel eines Tantalkondensators mit

1 Kondensatorkörper

5 gegebenenfalls vorhandener leitfähiger Außenschicht

6 Graphit/Silberschicht

7 Drahtkontakt zum Elektrodenkörper 2

8 äußeren Kontakten

9 Verkapselung

10 Bildausschnitt

Fig. 2 beschreibt den vergrößerten Bildausschnitt 10 aus Fig. 1 der den schematischer Schichtaufbau des Tantalkondensators mit

10 Bildausschnitt
2 porösem Elektrodenkörper (Anode)
3 Dielektrikum
4 Feststoffelektrolyt (Kathode)
5 gegebenenfalls vorhandener leitfähiger Außenschicht
6 Graphit/Silberschicht

wiedergibt.

Prinzipiell kann ein solcher erfindungsgemäßer Elektrolytkondensator folgendermaßen hergestellt werden: Zunächst wird z.B. ein Ventilmetall-Pulver mit einer hohen Oberfläche gepresst und zu einem porösen Elektrodenkörper gesintert. Hierbei wird üblicherweise ein elektrischer Kontaktdraht bevorzugt aus einem Ventilmetall wie z. B. Tantal mit in den Elektrodenkörper eingepresst. Es können alternativ auch Metallfolien geätzt werden, um eine poröse Folie zu erhalten.

Der Elektrodenkörper wird dann durch anodische Oxidation, mit einem Dielektrikum, d. h. einer Oxidschicht, überzogen. Auf den oxidierten Elektrodenkörper wird daraufhin erfindungsgemäß eine Dispersion A) enthaltend wenigstens Teilchen B) eines elektrisch leitfähigen Polymers und ein Dispersionsmittel D) aufgebracht und zur Bildung des Feststoffelektrolyten das Dispersionsmittel D) wenigstens teilweise entfernt und/oder ausgehärtet. Gegebenenfalls werden weitere Schichten (in Fig. 1 und Fig. 2 mit leitfähiger Außenschicht (5) bezeichnet) auf die äußere Oberfläche des Kondensatorkörpers aufgebracht. Ein Überzug mit gut leitfähigen Schichten, wie Graphit und Silber, oder ein metallischer Kathodenkörper dient als Elektrode zur Ableitung des Stroms. Schließlich wird der Kondensator kontaktiert und eingekapselt.

Weiterhin bevorzugt ist eine Ausführungsform des Verfahrens zur Herstellung von Elektrolytkondensatoren, dadurch gekennzeichnet, dass es sich bei dem Elektrodenmaterial um ein Ventilmetall oder um eine Verbindung mit einem Ventilmetall vergleichbaren elektrischen Eigenschaften handelt.

Als Ventilmetall sind im Rahmen der Erfindung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die Oxidschicht zerstören können. Zu den Ventilmetallen zählen Be, Mg, Al, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertretern der Ventilmetalle sind Al, Ta, und Nb. Verbindungen einem Ventilmetall vergleichbaren elektrischen Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im Allgemeinen nicht als Ventilmetall betrachtet. Schichten von oxidiertem NbO weisen jedoch die typischen Eigenschaften von Ventilmetalloxidschichten auf, so dass NbO oder eine Legierung oder Verbindung von NbO mit anderen Elementen typische Beispiele für solche Verbindungen mit einem Ventilmetall vergleichbaren elektrischen Eigenschaften sind.

Bevorzugt sind Elektrodenmaterialien aus Tantal, Aluminium und solche Elektrodenmaterialien, die auf Niob oder Nioboxid basieren.

Unter Elektrodenmaterialien, die auf Niob oder Nioboxid basieren, werden solche Materialien verstanden, bei denen Niob oder Nioboxid die Komponente mit dem größten Stoffmengenanteil darstellen.

Bei dem Elektrodenmaterial, das auf Niob oder Nioboxid basiert, handelt es sich bevorzugt um Niob, NbO, ein Nioboxid $NbO_x$, wobei x Werte von 0,8 bis 1,2 annehmen kann, Niobnitrid, Nioboxynitrid oder Mischungen dieser Materialien oder um eine Legierung oder Verbindung von wenigstens einem dieser Materialien mit anderen Elementen handelt.

Bevorzugt als Legierungen sind Legierungen mit wenigstens einem Ventilmetall, wie beispielsweise Be, Mg, Al, Ge, Si, Sn, Sb, Bi, Ti, Zr, Hf, V, Nb, Ta oder W.

Demzufolge sind unter dem Begriff "oxidierbares Metall" nicht nur Metalle, sondern auch eine Legierung oder Verbindung eines Metalls mit anderen Elementen gemeint, sofern sie metallische Leitfähigkeit besitzen und oxidierbar sind.

Die oxidierbaren Metalle werden beispielsweise in Pulverform zu einem porösen Elektrodenkörper gesintert

oder es wird einem metallischen Körper eine poröse Struktur aufgeprägt. Letzteres kann z.B. durch Ätzen einer Folie erfolgen.

Die porösen Elektrodenkörper werden in einem geeigneten Elektrolyten anodisch oxidiert. Geeignete Elektrolyten sind beispielsweise verdünnte Säuren, wie beispielsweise Phosphorsäure, Schwefelsäure, Salpetersäure, Borsäure, Essigsäure, Adipinsäure oder Lösungen der Salze von Säuren, wie beispielsweise Natriumphosphate, Natriumacetat, Ammoniumadipat, Natriumtetraborat-Decahydrat. Die Elektrolyten können Zusätze oder größere Mengen z.B. an Alkoholen, wie beispielsweise Methanol, Ethanol, Butanol oder Glykole, oder an Ketonen enthalten, um die Qualität des Oxidfilms zu verbessern.

Zur anodischen Oxidation werden die porösen Elektrodenkörper beispielsweise in den Elektrolyten getränkt durch Anlegen einer Spannung oxidiert. Die Höhe dieser Spannung - auch Anodisierspannung genannt - ist abhängig von der zu erzielenden Oxidschichtdicke bzw. der späteren Nennspannung des Kondensators.

Typischerweise wird eine Anodisierspannung größer als die Nennspannung gewählt, um niedrigere Restströme und eine höhere Zuverlässigkeit des Kondensators zu gewährleisten. Bevorzugt sind Anodisierspannungen, die größer als die Nennspannung, aber kleiner als das 5-fache der Nennspannung sind, besonders bevorzugt sind Anodisierspannungen, die größer als die Nennspannung, aber kleiner als das 4-fache der Nennspannung sind, ganz besonders bevorzugt sind Anodisierspannungen, die größer als die Nennspannung, aber kleiner als das 3-fache der Nennspannung sind, und überaus bevorzugt sind Anodisierspannungen, die größer als die Nennspannung, aber kleiner als das doppelte der Nennspannung sind. Bevorzugte Anodisierspannungen sind 30 bis 1000 V, besonders bevorzugt 45 bis 500V, ganz besonders bevorzugt 70 bis 500 V, überaus bevorzugt 100 bis 500 V.

Die Anodisierspannung kann während der anodischen Oxidation beispielsweise konstant oder gepulst sein oder kontinuierlich ansteigen. Die maximal auftretende Anodisierspannung bestimmt dabei die Oxidfilmdicke.

Die Oxidfilmdicke ergibt sich aus dem Schichtbildungsfaktor k, der charakteristisch für das Oxid ist, und der maximalen Anodisierspannung über

$$\text{Oxidfilmdicke} = k * \text{maximale Anodisierspannung},$$

wobei die maximale Anodisierspannung in Volt und der Schichtbildungsfaktor k des Oxidfilms in nm/Volt gegeben ist.

Beispielsweise beträgt k für Aluminiumoxid ca. 1.2 nm/V, für Tantaloxid ca. 1.8 nm/V und für Nioboxid ca. 2.8 nm/V.

Bevorzugt sind beispielsweise Oxidfilmdicken für Kondensatoren, deren Elektrodenmaterial auf Aluminium basiert, von größer 30 nm, besonders bevorzugt von größer 50 nm, ganz besonders bevorzugt größer 80 nm, überaus bevorzugt größer 110 nm.

Bevorzugt sind beispielsweise Oxidfilmdicken für Kondensatoren, deren Elektrodenmaterial auf Tantal basiert, von größer 50 nm, besonders bevorzugt von größer 80 nm, ganz besonders bevorzugt größer 120 nm, überaus bevorzugt größer 170 nm.

Bevorzugt sind beispielsweise Oxidfilmdicken für Kondensatoren, deren Elektrodenmaterial auf Niob oder Nioboxid basiert, von größer 80 nm, besonders bevorzugt von größer 130 nm, ganz besonders bevorzugt größer 190 nm, überaus bevorzugt größer 260 nm.

Bevorzugt werden zur Herstellung des Elektrodenkörpers Metallpulver mit einer spezifischen Ladung von 500 bis 200000 μC/g, besonders bevorzugt mit einer spezifischen Ladung von 1000 bis 100000 μC/g, ganz besonders bevorzugt mit einer spezifischen Ladung von 1000 bis 50000 μC/g eingesetzt.

Die spezifische Ladung berechnet sich dabei wie folgt:

$$\text{Spezifische Ladung} = (\text{Kapazität} * \text{Anodisierspannung}) / \text{Gewicht des oxidierten Elektrodenkörpers}.$$

Die Kapazität ergibt sich dabei aus der Kapazität des oxidierten Elektrodenkörpers gemessen bei 120 Hz in einem wässrigen Elektrolyten. Die elektrische Leitfähigkeit des Elektrolyten ist dabei hinreichend groß, so dass es bei 120 Hz noch nicht zu einem Kapazitätsabfall aufgrund des elektrischen Widerstands des Elektrolyten kommt. Beispielsweise werden 18 %ige wässrige Schwefelsäure-Elektrolyte zur Messung eingesetzt.

Die eingesetzten Elektrodenkörper haben eine Porosität von 10 bis 90 %, bevorzugt von 30 bis 80 %, besonders bevorzugt von 50 bis 80 %.

Die porösen Elektrodenkörper haben einen mittleren Porendurchmesser von 10 bis 10000 nm, bevorzugt von 50 bis 5000 nm, besonders bevorzugt von 100 bis 3000 nm.

Besonders bevorzugt ist demgemäss eine Ausführungsformates Verfahrens zur Herstellung von Elektrolytkondensatoren, dadurch gekennzeichnet, dass es sich bei dem Ventilmetall oder der Verbindung einem Ventilmetall vergleichbaren elektrischen Eigenschaften um Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen handelt.

Das Dielektrikum besteht bevorzugt aus einem Oxid des Elektrodenmaterials. Es enthält gegebenenfalls weitere Elemente und/oder Verbindungen.

Die Kapazität des oxidierten Elektrodenkörpers hängt neben der Art des Dielektrikums von der Oberfläche und der Dicke des Dielektrikums ab. Die spezifische Ladung ist ein Maß dafür, wie viel Ladung pro Gewichtseinheit der oxidierte Elektrodenkörper aufnehmen kann. Die spezifische Ladung berechnet sich wie folgt:

**Spezifische Ladung = (Kapazität * Nennspannung)/ Gewicht des oxidierten Elektrodenkörpers.**

Die Kapazität ergibt sich dabei aus der Kapazität des fertigen Kondensators gemessen bei 120 Hz und die Nennspannung ist die spezifizierte Einsatzspannung des Kondensators (rated voltage). Das Gewicht des oxidierten Elektrodenkörpers bezieht sich auf das reine Gewicht des mit Dielektrikum überzogenen porösen Elektrodenmaterials ohne Polymer, Kontakte und Verkapselungen.

Bevorzugt weisen die nach dem erfindungsgemäßen Verfahren hergestellten Elektrolytkondensatoren eine spezifische Ladung von 100 bis 100000 $\mu$C/g, besonders bevorzugt mit einer spezifischen Ladung von 500 bis 75000 $\mu$C/g, ganz besonders bevorzugt mit einer spezifischen Ladung von 500 bis 30000 $\mu$C/g.auf.

Bevorzugt sind Elektrolytkondensatoren mit Nennspannungen größer 15V, besonders bevorzugt mit Nennspannungen größer 19V, ganz besonders bevorzugt mit Nennspannungen größer 24 und überaus bevorzugt mit Nennspannungen größer 34 V.

Als Vorstufen für die Herstellung leitfähiger Polymere der Teilchen B) in der Dispersion, im Folgenden auch als Vorstufen bezeichnet, werden entsprechende Monomere oder deren Derivate verstanden. Es können auch Mischungen von unterschiedlichen Vorstufen verwendet werden. Geeignete monomere Vorstufen sind beispielsweise gegebenenfalls substituierte Thiophene, Pyrrole oder Aniline, bevorzugt gegebenenfalls substituierte Thiophene, besonders bevorzugt gegebenenfalls substituierte 3,4-Alkylendioxythiophene.

Als substituierte 3,4-Alkylendioxythiophene seien beispielhaft die Verbindungen der allgemeinen Formel (III) oder (IV) oder einer Mischung aus Thiophenen der allgemeinen Formeln (III) und (IV),

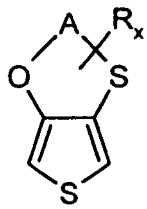 (III) 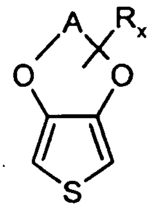 (IV)

aufgeführt,
worin

A für einen gegebenenfalls substituierten $C_1$-$C_5$-Alkylenrest, bevorzugt für einen gegebenenfalls substituierten $C_2$-$C_3$-Alkylenrest, steht,

R für einen linearen oder verzweigten, gegebenenfalls substituierten $C_1$-$C_{18}$-Alkylrest, bevorzugt linearen oder verzweigten, gegebenenfalls substituierten $C_1$-$C_{14}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest, bevorzugt gegebenenfalls substituierten $C_1$-$C_2$-Hydroxyalkylrest, oder einen Hydroxylrest steht,

x für eine ganze Zahl von 0 bis 8 steht, bevorzugt von 0 bis 6, besonders bevorzugt für 0 oder 1 steht und

für den Fall, dass mehrere Reste R an A gebunden sind, diese gleich oder unterschiedlich sein können,

Ganz besonders bevorzugte monomere Vorstufen sind gegebenenfalls substituierte 3,4-Ethylendioxythiophene.

Als substituierte 3,4-Ethylendioxythiophene seien beispielhaft die Verbindungen der allgemeinen Formel (V) genannt,

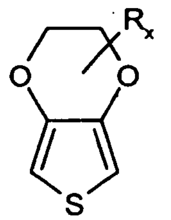

(V)

worin

R und x die für die allgemeine Formeln (III) und (IV) genannte Bedeutung haben.

Unter Derivaten dieser monomeren Vorstufen werden im Sinne der Erfindung beispielsweise Dimere oder Trimere dieser monomeren Vorstufen verstanden. Es sind auch höhermolekulare Derivate, d.h. Tetramere, Pentamere etc. der monomeren Vorstufen als Derivate möglich.

Als Derivate substituierter 3,4-Alkylendioxythiophene seien beispielhaft die Verbindungen der allgemeinen Formel (VI) genannt,

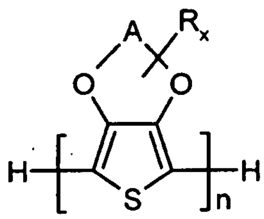

(VI)

worin

n für eine ganze Zahl von 2 bis 20, bevorzugt 2 bis 6, besonders bevorzugt für 2 oder 3 steht, und

A, R und x die für die allgemeine Formeln (III) und (IV) genannte Bedeutung haben.

Die Derivate können sowohl aus gleichen wie unterschiedlichen Monomereinheiten aufgebaut sein und in reiner Form sowie im Gemisch untereinander und/oder mit den monomeren Vorstufen eingesetzt werden. Auch oxidierte oder reduzierte Formen dieser Vorstufen sind im Sinne der Erfindung von dem Begriff "Vorstufen" umfasst, sofern bei ihrer Polymerisation die gleichen leitfahigen Polymeren entstehen wie bei den vorangehend aufgeführten Vorstufen.

Als Substituenten für die oben genannten Vorstufen, insbesondere für die Thiophene, bevorzugt für die 3,4-Alkylendioxythiophene kommen die für die allgemeine Formeln (III) und (IV) für R genannten Reste in Frage.

Als Substituenten für Pyrrole und Aniline kommen beispielsweise die oben aufgeführten Reste A und R und/ oder die weiteren Substituenten der Reste A und R in Frage.

Als gegebenenfalls weitere Substituenten der Reste A und/oder der Reste R kommen die im Zusammenhang mit den allgemeinen Formeln (I) und (II) genannten organischen Gruppen in Frage.

Verfahren zur Herstellung der monomeren Vorstufen für die Herstellung leitfähiger Polymere sowie deren Derivaten sind dem Fachmann bekannt und beispielsweise in L. Groenendaal, F. Jonas, D. Freitag, H. Pielartzik & J. R. Reynolds, Adv. Mater. 12 (2000) 481 - 494 und darin zitierter Literatur beschrieben.

Die für die Herstellung der zu verwendenden Polythiophene erforderlichen 3,4-Alkylenoxythiathiophene der Formel (III) sind dem Fachmann bekannt oder nach bekannten Verfahren herstellbar (beispielsweise gemäß P. Blanchard, A. Cappon, E. Levillain, Y. Nicolas, P. Frère und J. Roncali, Org. Lett. 4 (4), 2002, S. 607 - 609).

Die Herstellung der Dispersionen erfolgt aus den oben beschriebenen Vorstufen beispielsweise analog zu den in EP-A 440 957 (US 5,300,575) genannten Bedingungen. Eine verbesserte Variante für die Herstellung der Dispersionen stellt der Einsatz von Ionentauscher zur Entfernung des anorganischen Salzgehaltes oder eines Teils davon dar. Eine solche Variante ist beispielsweise in DE-A 19 627 071 (US 6,376,105) beschrieben. Der Ionentauscher kann beispielsweise mit dem Produkt verrührt werden oder das Produkt wird über eine mit Ionenaustauschersäule gefüllt Säule gefördert. Durch die Verwendung des Ionenaustauschers können beispielsweise die oben beschriebenen niedrigen Metallgehalte erzielt werden.

Die Teilchengröße der Teilchen B) in der Dispersion A) kann nach der Entsalzung beispielsweise mittels eines Hochdruckhomogenisators verringert werden. Dieser Vorgang kann auch wiederholt werden um den Effekt zu vergrößern. Besonders hohe Drücke zwischen 100 und 2000 bar haben sich als vorteilhaft erwiesen, um die Teilchengröße stark zu reduzieren.

Auch eine Herstellung des Polyanilin/Polyanion- oder Polythiophen/Polyanion-Komplexes und anschließende Dispergierung oder Redispergierung in einem oder mehreren Lösungsmittel(n) ist möglich.

Der Feststoffanteil der Teilchen B) des elektrisch leitfähigen Polymers in der Dispersion A) beträgt 0,1 - 90 Gew.%, bevorzugt 0,5 - 30 Gew.% und ganz besonders bevorzugt 0.5 - 10 Gew.-%.

Die Teilchen B) des leitfähigen Polymers bilden bevorzugt eine stabile Dispersion. Es können jedoch auch instabile Dispersionen verwendet werden, in dem diese vor Gebrauch beispielsweise gerührt, gerollt oder aufgeschüttelt werden, um eine gleichmäßige Verteilung der Teilchen B) zu gewährleisten.

Die Dispersionen A) werden nach bekannten Verfahren, z.B. durch Spincoating, Tränkung, Gießen, Auftropfen, Spritzen, Aufsprühen, Aufrakeln, Bestreichen oder Bedrucken, beispielsweise Ink-jet-, Sieb- oder Tampondrucken, auf das Dielektrikum des Elektrodenkörpers aufgebracht.

Das Eindringen der Dispersion in den porösen Elektrodenkörper kann beispielsweise durch Über- oder Unterdruck, Vibration, Ultraschall oder Wärme erleichtert werden.

Die Aufbringung kann direkt oder unter Verwendung eines Haftvermittlers, beispielsweise eines Silans, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltri-methoxysilan oder Octyltriethoxysilan, und/oder einer oder mehrerer anderer funktionellen Schichten auf das Dielektrikum des Elektrodenkörpers erfolgen.

Nach dem Aufbringen der Dispersion A) wird das Dispersionsmittel D) vorzugsweise entfernt, damit sich aus den Teilchen B) und gegebenenfalls weiteren Additiven in der Dispersion der Feststoffelektrolyt ausbilden kann. Es kann aber auch mindestens ein Teil des Dispersionsmittels D) im Feststoffelektrolyten verbleiben. Je nach Art des Dispersionsmittels D) kann dieses auch sowohl vollständig als auch nur der nach teilweiser Entfernung noch verbleibende Teil ausgehärtet werden.

Das Entfernen des Dispersionsmittels D) nach dem Aufbringen der Dispersion kann durch einfaches Verdampfen bei Raumtemperatur erfolgen. Zur Erzielung höherer Verarbeitungsgeschwindigkeiten ist es jedoch vorteilhafter, die Dispersionsmittel D) bei erhöhten Temperaturen, z.B. bei Temperaturen von 20 bis zu 300°C, bevorzugt 40 bis zu 250°C, zu entfernen. Eine thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Dispersion 5 Sekunden bis mehrere Stunden. Für die thermische Behandlung können auch Temperaturprofile mit unterschiedlichen Temperaturen und Verweilzeiten eingesetzt werden.

Die Wärmebehandlung kann z.B. in der Weise ausgeführt werden, dass man die beschichteten oxidierten Elektrodenkörper mit einer solchen Geschwindigkeit durch eine auf der gewünschten Temperatur befindliche Wärmekammer bewegt, dass die gewünschte Verweilzeit bei der gewählten Temperatur erreicht wird, oder mit einer auf der gewünschten Temperatur befindlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Je nach Art des oxidierten Elektrodenkörpers kann es vorteilhaft sein, den oxidierten Elektrodenkörper weitere Male mit den Dispersionen zu imprägnieren, um dickere Polymerschichten und/oder eine größere Bedeckung der Dielektrikumsoberfläche zu erzielen.

Bevorzugt erfolgt das Aufbringen der Dispersion A) und das wenigstens teilweise Entfernen und/oder Aushärten des Dispersionsmittels D) mehrfach.

Zwischen a) dem Aufbringen der Dispersion und b) dem wenigstens teilweisen Entfernen und/oder Aushärten des Dispersionsmittels D) können gegebenenfalls weitere Schritte erfolgen.

Als gegebenenfalls weitere Schritte können beispielsweise ein Teil der Dispersion wieder vom oxidierten Elektrodenkörper entfernt werden, ein weitere Tränkung mit der gleichen oder einer anderen Dispersion erfolgen, eine Spülung mit gleichen oder anderen Lösungsmitteln enthaltend gegebenenfalls Additive durchgeführt werden oder eine Lagerung erfolgen.

Überraschend wurde gefunden, dass ein Entfernen der Dispersion von der äußeren Oberfläche des oxidierten Elektrodenkörpers nach dem Aufbringen und vor dem Trocknen, insbesondere bei mehrmaligen Tränkungs- und Trocknungszyklen, zu einer höheren Bedeckung und einem niedrigeren ESR führt.

Bevorzugt ist demnach ein Verfahren, bei dem nach Aufbringen der Dispersion A) die Teilchen B) des leitfähigen Polymers, die sich auf der äußeren Oberfläche des Elektrodenkörpers befinden, wenigstens teilweise, besonders bevorzugt möglichst weitgehend entfernt werden. Dies kann z.B. durch Abspülen, Abtupfen, Abblasen, Abschleudern oder ähnliches erfolgen. Auch der Einsatz von beispielsweise Ultraschall, Wärme oder Strahlung zur Entfernung des äußeren

Polymerfilms ist möglich. Bevorzugt ist ein Spülen mit Lösungsmittel, bevorzugt mit dem Lösungsmittel, das als Dispersionsmittel verwendet wird.

Die Teilchen B) des leitfähigen Polymers können aber auch nach dem wenigstens teilweisen Entfernen und/oder Aushärten des Dispersionsmittels D) von der äußeren Oberfläche des Elektrodenkörpers entfernt werden, beispielsweise durch Ultraschall, Laserstrahlung, Lösungsmittel oder mechanischem Ablösen.

Die Bedeckung des Dielektrikums mit dem Feststoffelektrolyten kann folgendermaßen bestimmt werden: Die Kapazität des Kondensators wird im trockenen und feuchten Zustand bei 120 Hz gemessen. Der Bedeckungsgrad ist das Verhältnis der Kapazität im trockenen Zustand zu der Kapazität im feuchten Zustand ausgedrückt in Prozent. Trockener Zustand bedeutet, dass der Kondensator über mehrere Stunden bei erhöhter Temperatur (80-120°C) getrocknet wurde, bevor er vermessen wird. Feuchter Zustand bedeutet, dass der Kondensator über mehrere Stunden einer gesättigten Luftfeuchte bei erhöhtem Druck, beispielsweise in einem Dampfdruckkessel, ausgesetzt wird. Die Feuchtigkeit dringt dabei in Poren ein, die vom Feststoffelektrolyten nicht bedeckt sind, und wirkt dort als Flüssigelektrolyt.

Die Bedeckung des Dielektrikums durch den Feststoffelektrolyten ist vorzugsweise größer als 50 %, besonders bevorzugt größer als 70 %, ganz besonders bevorzugt größer als 80 %.

Nach Herstellung des Feststoffelektrolyten können auf dem Kondensatorkörper weitere leitfähige Schichten, wie z.B. eine leitfähige Außenschicht aufgebracht werden. Bevorzugt wird eine polymere Außenschicht, beispielsweise wie in der europäischen Patentanmeldung EP-A 1 524 678 (US 6,987,663) beschrieben, aufgebracht. Weitere gut leitfähige Schichten wie beispielsweise Graphit- und/oder Silberschichten dienen als Stromkollektor. Abschließend wird der Kondensator kontaktiert und verkapselt.

Überraschend wurde gefunden, dass die nach dem erfindungsgemäßen Verfahren hergestellten Kondensatoren eine deutlich höhere Durchbruchspannung besitzen als Kondensatoren, die mit einem in-situ Polymerisationsverfahren hergestellt wurden.

Die Durchbruchsspannung der erfindungsgemäßen Kondensatoren ist bevorzugt größer als 150% der Nennspannung der Kondensatoren, besonders bevorzugt größer als 200% der Nennspannung, ganz besonders bevorzugt größer als 250% der Nennspannung.

Die Durchbruchsspannung der erfindungsgemäßen Kondensatoren ist bevorzugt größer als 40% der Anodisierspannung der Elektrodenkörper, besonders bevorzugt größer als 50% der Anodisierspannung, ganz besonders bevorzugt größer als 60% der Anodisierspannung, überaus bevorzugt größer als 75% der Anodisierspannung.

Das Verhältnis r aus der Durchbruchsspannung (in Volt) zum Quotienten aus Oxidfilmdicke d (in nm) und Schichtbildungsfaktor k (in nm/Volt) des Oxids

$$r = \text{Durchbruchspannung} / (d/k)$$

gibt demnach das Verhältnis von Durchbruchspannung zur Anodisierspannung an und ist ein Maß für die Zuverlässigkeit des Kondensators.

Bevorzugt ist ein Elektrolytkondensator mit einem Feststoffelektrolyten enthaltend leitfähige Polymere und einer Nennspannung größer 15 V, dadurch gekennzeichnet, dass der Wert r größer als 0,4 ist, besonders bevorzugt größer als 0,5, ganz besonders bevorzugt größer als 0,6 und überaus bevorzugt größer als 0,75 ist.

Das erfindungsgemäße Verfahren ermöglicht somit die Herstellung von Feststoffelektrolytkondensatoren mit hoher Nennspannung, deren Herstellung mittels in-situ Polymerisation des Feststoffelektrolyten bisher nicht möglich war. Die nach dem erfindungsgemäßen Verfahren hergestellten Kondensatoren zeichnen sich durch einen niedrigen Äquivalenten Serienwiderstand (ESR), einen niedrigen Reststrom und eine hohe Durchbruchsspannung aus.

Die erfindungsgemäß hergestellten Elektrolytkondensatoren eignen sich aufgrund ihres niedrigen Reststroms und ihres niedrigen ESR hervorragend zur Verwendung als Bauteil in elektronischen Schaltungen, die eine hohe Nennspannung erfordern, wie beispielsweise in der Automobilelektronik, in Spannungsversorgungen oder Steuerungen für elektrische Motoren. Die Verwendung ist auch Gegenstand der Erfindung. Bevorzugt sind elektronische Schaltungen, wie sie sich beispielsweise in Computern (Desktop, Laptop, Server), in Computerperipheriegeräten (z.B. PC Karten), in tragbaren elektronischen Geräten, wie z.B. Mobiltelefonen, Digitalkameras oder Unterhaltungselektronik, in Geräten der Unterhaltungselektronik, wie z.B. in CD/DVD Spielern und Computerspielkonsolen, in Navigationssystemen, in Telekommunikationseinrichtungen, in Haushaltsgeräten, in Spannungsversorgungen, in Motorsteuerungen oder in der Automobilelektronik befinden.

Die folgenden Beispiele dienen der beispielhaften Erläuterung der Erfindung und sind nicht als Beschränkung aufzufassen.

**Beispiele**

**Beispiel 1:**

In einem 2 1 Dreihalskolben mit Rührer und Innenthermometer wurden 868 g entionisiertes Wasser, 330 g einer wässrigen Polystyrolsulfonsäurelösung mit einem mittleren Molekulargewicht von 70000 und einem Feststoffgehalt von 3,8 Gew.% vorgelegt. Die Reaktionstemperatur wurde zwischen 20 und 25°C gehalten. Unter Rühren wurden 5,1 g 3,4-Ethylendioxythiophen zugegeben. Die Lösung wurde 30 Minuten gerührt. Anschließend wurden 0,03 g Eisen (III)-sulfat und 9,5 g Natriumpersulfat zugegeben und die Lösung weitere 24 h gerührt.

Nach Abschluss der Reaktion wurden zur Entfernung anorganischer Salze 100 ml eines stark sauren Kationenaustauschers und 250 ml eines schwach basischen Anionenaustauschers zugegeben und die Lösung weitere 2 h gerührt. Der Ionenauschtauscher wurde abfiltriert. Die Poly(3,4-ethylendioxythiophen)/Polystyrolsulfonat-Dispersion wurde zehnmal bei einem Druck von 700 bar mit einem Hochdruckhomogenisator homogenisiert. Anschließend wird die Dispersion auf einen Feststoffgehalt von 1,6 % aufkonzentriert.

Die so hergestellte Dispersion A)-1 wies folgende Teilchengrößenverteilung auf:

| | |
|---|---|
| $d_{10}$ | 19 nm |
| $d_{50}$ | 26 nm |
| $d_{90}$ | 40 nm |

Der Durchmesser der Teilchen B) des leitfähigen Polymers bezieht sich auf eine Massenverteilung der Teilchen B) in der Dispersion in Abhängigkeit vom Teilchendurchmesser. Die Bestimmung erfolgte über eine Ultrazentrifugenmessung. Die Teilchengröße wurde im gequollenen Zustand der Teilchen bestimmt.

Die Viskosität der Dispersion betrug 26 mPa*s bei einer Scherrate von 100 Hz und 20°C. Eine ICP-Analyse der Metallgehalte der Dispersion A)-1 ergab folgende Werte:

| | |
|---|---|
| Natrium (Na): | 110 mg/kg |
| Magnesium (Mg): | 0,58 mg/kg |
| Aluminium (Al): | 1,0 mg/kg |
| Silicium (Si): | 1,2 mg/kg |
| Phosphor (P): | 5,9 mg/kg |
| Kalium (K): | 0,53 mg/kg |
| Calcium (Ca): | 3,9 mg/kg |
| Chrom (Cr): | 0,16 mg/kg |
| Eisen (Fe): | 0,89 mg/kg |
| Zink (Zn): | <0,01 mg/kg |

**Beispiel 2:**

100 g der Dispersion A)-1 aus Beispiel 1 wurden 5 g Dimethylsufoxid (DMSO) zugesetzt und zu einer Dispersion A)-2 verrührt. Ein Teil dieser Dispersion A)-2 wurde auf einen Glasobjektträger (26 mm*26 mm*1 mm) mittels eines Spincoaters (Chemat Technology KW-4A) bei 1000 U/min für 5 Sekunden aufgeschleudert. Die Probe wurde 10 min bei 120°C getrocknet. Anschließend wurden zwei gegenüberliegende Kanten des Objektträgers mit Leitsilber beschichtet. Nach Trocknung des Leitsilbers wurden die beiden Silberstreifen kontaktiert und mit einem Keithley 199 Multimeter der Oberflächenwiderstand ermittelt. Die Schichtdicke wurde mit einem Tencor Alpha Step 500 Surface Profiler bestimmt. Aus Oberflächenwiderstand und Schichtdicke d wurde die spezifische Leitfähigkeit $\sigma$ nach $\sigma = 1/(R_o * d)$ ermittelt. Die Schichtdicke betrug 120 nm und die spezifische Leitfähigkeit 483 S/cm.

**Beispiel 3:**

3.1. Herstellung von oxidierten Elektrodenkörpern:

Tantalpulver mit einer spezifischen Kapazität von 30 000 µFV/g wurde unter Einschluss eines Tantaldrahtes 7 zu Pellets gepresst und gesintert, um einen Elektrodenkörper 2 mit den Abmessungen 4,25 mm * 3 mm* 1 mm zu bilden. Die porösen Elektrodenkörper 2 hatten einen mittleren Porendurchmesser von 960 nm und wurden zur Bildung eines Dielektrikums in einem Phosphorsäureelektrolyten auf 150 V anodisiert, was einer Oxidfilmdicke von ca. 270 nm

entspricht.

3.2 Herstellung des Feststoffelektrolyten mit dem erfindungsgemäßen Verfahren

100 g der Dispersion A)-1 aus Beispiel 1,4 g Dimethylsufoxid (DMSO) und 0,5 g 3-Glycidoxypropyltrimethoxysilan (Silquest A-187, OSi Specialties) wurden in einem Becherglas mit Rührer intensiv zu einer Dispersion A)-3 gemischt.

Die oxidierten Elektrodenkörper wurden in dieser Dispersion A)-3 1 min getränkt. Anschließend wurden die getränkten Elektrodenkörper unter fließendem Wasser abgespült, um die Dispersion A)-3 auf den Außenseiten des Elektrodenkörpers zu entfernen. Danach erfolgte eine Trocknung bei 120°C für 10 min. Tränkung, Spülung und Trocknung wurden neun weitere Male durchgeführt.

3.3 Herstellung einer polymeren Außenschicht

a) Herstellung einer Dispersion A)-4:

In einem 2 1 Dreihalskolben mit Rührer und Innenthermometer werden 868 g entionisiertes Wasser, 330 g einer wässrigen Polystyrolsulfonsäurelösung mit einem mittleren Molekulargewicht von 70000 und einem Feststoffgehalt von 3,8 Gew.% vorgelegt. Die Reaktionstemperatur wurde zwischen 20 und 25°C gehalten. Unter Rühren wurden 5,1 g 3,4-Ethylendioxythiophen zugegeben. Die Lösung wurde 30 Minuten gerührt. Anschließend wurden 0,03 g Eisen (III)-sulfat und 9,5 g Natriumpersulfat zugegeben und die Lösung weitere 24 h gerührt. Nach Abschluss der Reaktion wurden zur Entfernung anorganischer Salze 100 ml eines starksauren Kationenaustauschers und 250 ml eines schwachbasischen Anionenaustauschers zugegeben und die Lösung weitere 2 h gerührt. Der Ionenauschtauscher wurde abfiltriert.

Herstellung eines PEDT/Toluolsulfonat-Pulvers:

In einem 5 1-Glasreaktor mit Rührer und Thermometer wurden 2,5 1 demineralisiertes Wasser vorgelegt. Unter Rühren wurden 214,2 g p-Toluolsufonsäure-monohydrat und 2,25 g Eisen(III)sulfat-heptahydrat eingetragen. Nachdem sich alles gelöst hatte, wurden 85,8 g 3,4-Ethylendioxythiophen zugegeben und 30 Minuten gerührt. Anschließend wurden 192,9 g Natriumperoxodisulfat unter Rühren eingetragen und die Mischung weitere 24 Stunden bei Raumtemperatur gerührt. Nach Reaktionsende wurde das entstandene PEDT/Toluolsulfonat-Pulver auf einer Porzellannutsche abfiltriert, mit 3 1 demineralisiertem Wasser gewaschen und zuletzt 6 Stunden bei 100°C getrocknet. Man erhielt 89 g eines blauschwarzen PEDT-Toluolsufonat-Pulvers.

In einem Becherglas mit Rührer wurden 180 g der PEDT/PSS-Dispersion A)-4, 10 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 2 g des PEDT/Toluolsulfonat-Pulvers mittels einer Perlmühle-Dissolver-Einheit eindispergiert. Dazu wurden 300 g Zirkonoxidperlen (Ø 1 mm) zugegeben und die Mischung 1 Stunde unter Kühlung mit Wasser bei 7000U/min gerührt. Zuletzt wurden die Mahlperlen über ein 0,8 μm Sieb abgetrennt. Diese erhaltene Dispersion A)-5 wies einen Feststoffgehalt von 4,7 % auf.

Die Kondensatorkörper aus 3.2 wurden in dieser Dispersion A)-5 getränkt und anschließend 10 min bei 120°C getrocknet. Tränkung und Trocknung wurden ein zweites Mal durchgeführt. Abschließend wurden die Elektrodenkörper mit einer Graphit und Silberschicht überzogen.

Von 9 der gefertigten Kondensatoren wurden die mittleren elektrischen Werte ermittelt:

| | |
|---|---|
| Kapazität: | 9,3 μF |
| ESR: | 53 mΩ |
| Reststrom bei einer Nennspannung von 40V: | < 0,1 μA |

Die Kapazität wurde bei 120 Hz und der äquivalente Serienwiderstand (ESR) bei 100 kHz mittels eines LCR Meters (Agilent 4284A) bestimmt. Der Reststrom wurde drei Minuten nach Anlegen einer 40 V Spannung mit einem Keithley 199 Multimeter bestimmt. Die Restströme lagen unter der Messgrenze von 0,1 μA des Multimeters.

Anschließend wurde die Durchbruchsspannung an 18 der gefertigten Kondensatoren ermittelt. Dazu wurde jeder Kondensator mit einem 1000 Ω Vorwiderstand versehen und einer ansteigenden Spannung ausgehend von 0 V mit Spannungsschritten von 1 V/s unterworfen. Der dabei auftretenden Strom wurde mit einem Keithley 199 Multimeter gemessen. Als Durchbruchsspannung wurde der Spannungswert festgelegt, bei dem der auftretende Strom auf über 500 μA anstieg.

Die 18 Kondensatoren hatten im Mittel eine Durchbruchsspannung von 119 V.

**Vergleichsbeispiel 1:**

18 anodisierte Elektrodenkörper wurden analog zu Beispiel 3.1 hergestellt. Diese Elektrodenkörper wurden mittels einer chemischen in-situ Polymerisation mit einem Feststoffelektrolyten versehen.

Dazu wurde eine Lösung, bestehend aus einem Gewichtsteil 3,4-Ethylendioxythiophen (BAYTRON® M, H.C. Starck GmbH) und 20 Gewichtsteilen einer 40 Gew.%igen ethanolischen Lösung von Eisen(III)-p-toluolsulfonat (BAYTRON® C-E, H.C. Starck GmbH) hergestellt.

Die Lösung wurde zur Imprägnierung der 18 anodisierten Elektrodenkörper (2) verwendet. Die Elektrodenkörper (2) wurden in dieser Lösung getränkt und anschließend für 30 min bei Raumtemperatur (20°C) getrocknet. Danach wurden sie 30 min bei 50°C in einem Trockenschrank wärmebehandelt. Anschließend wurden die Elektrodenkörper in einer 2 Gew.% igen wässrigen Lösung von p-Toluolsäure 60 min lang gewaschen.

Anschließend wurden die Elektrodenkörper wurden in einer 0,25 Gew.% wässrigen Lösung von p-Toluolsulfonsäure reformiert. Die Reformierspannung konnte jedoch nicht, wie gewünscht, auf die Höhe der Anodisierspannung von 150 V eingestellt werden. Um bereits deutlich kleinere Reformierspannungen von 75 bis 100 V zu erreichen, musste der Reformierstrom je Elektrodenkörper so stark angehoben werden, dass die Elektrodenkörper geschädigt wurden, da der Strom im Laufe der Zeit nicht mehr abfiel. Mit zunehmender Reformierspannung trat darüber hinaus eine starke Gasentwicklung an den Elektrodenkörpern auf.

Die Herstellung eines Feststoffelektrolyten mittels in-situ Polymerisation war für Elektrodenkörper mit einer Anodisierspannung von 150 V und einer Nennspannung von 40V nicht möglich.

**Beispiel 4:**

4.1. Herstellung von oxidierten Elektrodenkörpern:

Tantalpulver mit einer spezifischen Kapazität von 30 000 μFV/g wurde unter Einschluss eines Tantaldrahtes 7 zu Pellets gepresst und gesintert, um einen mit den Abmessungen 4,25 mm * 3 mm* 1 mm zu bilden. Die porösen Elektrodenkörper (2) hatten einen mittleren Porendurchmesser von 960 nm und wurden zur Bildung eines Dielektrikums in einem Phosphorsäureelektrolyten auf 100 V anodisiert, was einer Oxidfilmdicke von ca. 180 nm entspricht.

4.2 Herstellung des Feststoffelektrolyten mit dem erfindungsgemäßen Verfahren

Die Herstellung des Feststoffelektrolyten erfolgte analog zu Beispiel 3.2.

4.3 Herstellung einer polymeren Außenschicht

Die Herstellung der polymeren Außenschicht erfolgte analog zu Beispiel 3.3. Abschließend wurden die Elektrodenkörper mit einer Graphit und Silberschicht überzogen.

Die elektrischen Werte der Kondensatoren befinden sich in Tabelle 1.

**Vergleichsbeispiel 2 :**

9 anodisierte Elektrodenkörper wurden analog zu Beispiel 4.1 hergestellt. Diese Elektrodenkörper wurden mittels einer chemischen in-situ Polymerisation mit einem Feststoffelektrolyten versehen.

Dazu wurde eine Lösung, bestehend aus einem Gewichtsteil 3,4-Ethylendioxythiophen (BAYTRON® M, H.C. Starck GmbH) und 20 Gewichtsteilen einer 40 Gew.%igen ethanolischen Lösung von Eisen(III)-p-totuolsulfonat (BAYTRON® C-E, H.C. Starck GmbH) hergestellt.

Die Lösung wurde zur Imprägnierung der 9 anodisierten Elektrodenkörper (2) verwendet. Die Elektrodenkörper (2) wurden in dieser Lösung getränkt und anschließend für 30 min bei Raumtemperatur (20°C) getrocknet. Danach wurden sie 30 min bei 50°C in einem Trockenschrank wärmebehandelt. Anschließend wurden die Elektrodenkörper in einer 2 Gew.% igen wässrigen Lösung von p-Toluolsulfonsäure 60 min lang gewaschen. Die Elektrodenkörper wurden 30 min in einer 0,25 Gew.% wässrigen Lösung von p-Toluolsulfonsäure bei 50 V mit 9 mA reformiert, anschließend in destilliertem Wasser gespült und getrocknet. Die beschriebene Tränkung, Trocknung, Temperaturbehandlung und Reformierung wurde mit denselben Elektrodenkörpern noch zwei weitere Male durchgeführt.

Anschließend wurden die Kondensatorkörper analog zu Beispiel 4.3 mit einer polymeren Außenschicht versehen. Abschließend wurden die Elektrodenkörper mit einer Graphit und Silberschicht überzogen.

Die elektrischen Werte der Kondensatoren befinden sich in Tabelle 1.

**Vergleichsbeispiel 3:**

9 Kondensatoren wurden analog zu Vergleichsbeispiel 2 hergestellt, jedoch wurde eine Reformierspannung von 75 V eingestellt. Der dabei auftretende Strom betrug 72 mA.

Die elektrischen Werte der Kondensatoren befinden sich in Tabelle 1.

**Vergleichsbeispiel 4:**

9 Kondensatoren wurden analog zu Vergleichsbeispiel 2 hergestellt, jedoch wurde keine Reformierung durchgeführt.

Die elektrischen Werte der Kondensatoren befinden sich in Tabelle 1.

**Tabelle 1:**

| | Beispiel 4 | Vergleichsbeispiel 2 | Vergleichsbeispiel 3 | Vergleichsbeispiel 4 |
|---|---|---|---|---|
| Kapazität [μF] | 15 | 15 | 14 | 15 |
| ESR [mΩ] | 39 | 32 | 500 | 38 |
| Durchbruchsspannung [V] | 96 | 62 | 89 | 0 |

Die Kapazität wurde bei 120 Hz und der äquivalente Serienwiderstand (ESR) bei 100 kHz mittels eines LCR Meters (Agilent 4284A) bestimmt. Die Durchbruchspannung wurde analog zu Beispiel 3 bestimmt.

Alle Kondensatoren haben eine ähnliche Kapazität. Die Kondensatoren aus Beispiel 4 zeichnen sich jedoch durch einen niedrigen ESR und gleichzeitig eine hohe Durchbruchsspannung und damit eine hohe Zuverlässigkeit aus. Sie sind damit für hohe Nennspannungen bis ca. 50 V geeignet. Dagegen haben die Kondensatoren aus den Vergleichsbeispielen lediglich entweder einen niedrigen ESR oder eine hohe Durchbruchsspannung, jedoch nicht beides gleichzeitig.

Die Kondensatoren aus Vergleichsbeispiel 4 waren kurzgeschlossen, da sie nicht reformiert wurden. Die Durchbruchsspannung lag daher bei 0V. Diese Kondensatoren sind nicht verwendbar.

Eine Reformierung bei 50 V hebt die Durchbruchsspannung im Vergleichsbeispiel 2 zwar auf 62 V an, diese liegt jedoch weit unter der Anodisierspannung von 100 V, so dass die Kondensatoren aus Vergleichsbeispiel 2 bei hoher Nennspannung eine geringe Zuverlässigkeit aufweisen würden.

Durch eine Reformierung bei 75 V lässt sich in Vergleichsbeispiel 3 die Durchbruchsspannung deutlich erhöhen, jedoch wird dabei der Feststoffelektrolyt zerstört, so dass der ESR über eine Größenordnung ansteigt. Dadurch lassen sich diese Kondensatoren nicht mehr verwenden.

Dieser Vergleich zeigt, dass sich mit einer chemischen in-situ Polymerisation keine Polymer-Feststoffelektrolytkondensatoren für hohe Nennspannungen fertigen lassen. Mit dem erfindungsgemäßen Verfahren ist dies jedoch möglich.

**Patentansprüche**

**1.** Verfahren zur Herstellung eines Elektrolytkondensators, wenigstens umfassend, dass

a) ein poröser Elektrodenkörper (2) eines Elektrodenmaterials zur Bildung eines Dielektrikums (3), das die Oberfläche dieses Elektrodenmaterials bedeckt, anodisch oxidiert wird,
b) auf den porösen Körper, wenigstens umfassend
den porösen Etektrodenkörper (2) des Elektrodenmaterials und das Dielektrikum (3),
eine Dispersion A) aufgebracht wird,
die wenigstens Teilchen B) eines elektrisch leitfähigen Polymers und ein Dispersionsmittel D) enthält,
c) und zur Bildung eines Feststoffelektrolyten (4), der die Dielektrikumsoberfläche ganz oder teilweise bedeckt, das Dispersionmittel D) wenigstens teilweise entfernt und/oder ausgehärtet wird,

**dadurch gekennzeichnet, dass** die maximale Anodisierspannung bei der anodischen Oxidation des porösen Elektrodenkörpers (2) größer 30 V beträgt und die Teilchen B) des leitfähigen Polymers in der Dispersion A) einen mittels Ultazentrifugenmessung bestiminten mittleren Durchmesser von 1 bis 100 nm haben.

2. Verfahren gemäß Anspruch 1, **dadurch gekennzeichnet, dass** Dispersion en A) eingesetzt werden, deren Filme im getrockneten Zustand eine spezifische elektrische Leitfähigkeit von größer 10 S/cm aufweis en

3. Verfahren gemäß wenigstens einem der Ansprüche 1 bis 2, **dadurch gekennzeichnet, dass** die Teilchen B) des leitfähigen Polymers in der Dispersion A) einen $d_{90}$ Wert der Durchmesserverteilung welcher besagt, dass 90 % der Gesamtmasse aller Teilchen B) des leitfähigen Polymers in der Dispersion A) solchen Teilchen zugeordnet werden kann, die einen Durchmesser kleiner oder gleich dem $d_{90}$ Wert besitzen. -kleiner 150 nm haben.

4. Verfahren gemäß wenigstens einem der Ansprüche 1 bis 3, **dadurch gekennzeichnet, dass** die Teilchen B) des leitfähigen Polymers in der Dispersion A) einen $d_{10}$ Wert der Durchmesserverteilung welcher besagt, dass 10% der Gesamtmasse aller Teilchen B) des leitfähigen Polymers in der Dispersion A) solchen Teilchen zugeordnet werden kann, die einen Durchmesser kleiner oder gleich dem $d_{10}$ Wert besitzen, größer 1 nm häben.

5. Verfahren gemäß wenigstens einem der Ansprüche 1 bis 4, **dadurch gekennzeichnet dass** die Dispersion A) einen Gehalt an Metall-Kationen kleiner 5000 mg/kg besitzt.

6. Verfahren gemäß wenigstens einem der Ansprüche 1 bis 5, **dadurch gekennzeichnet, dass** die Dispersion A) einen Gehalt an Übergangsmetallen kleiner 1000 mg/kg besitzt.

7. Verfahren gemäß wenigstens einem der Ansprüche 1 bis 6, **dadurch gekennzeichnet, dass** die Dispersion A) einen Eisengehalt kleiner 1000 mg/kg besitzt

8. Verfahren gemäß wenigstens einem der Ansprüche 1 bis 7, **dadurch gekennzeichnet, dass** die Teilchen B) des elektrisch leitfähige Polymers wenigstens ein Polythiophen, Polypyrrol oder Polyanilin enthalten, die gegebenenfalls substituiert sind.

9. Verfahren gemäß Anspruch 8, **dadurch gekennzeichnet, dass** die Teilchen B) des elektrisch leitfähige Polymers wenigstens ein Polythiophen mit wiederkehrenden Einheiten der allgemeinen Formel (I) oder der Formel (II) oder wiederkehrenden Einheiten der allgemeinen Formeln (I) und (II) enthalten,

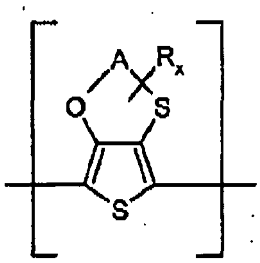 (I) 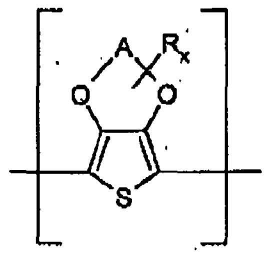 (II)

worin

A für einen gegebenenfalls substituierten $C_1$-$C_5$-Alkylenrest steht,
R für einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,
x für eine ganze Zahl von 0 bis 8 steht und

für den Fall, dass mehrere Reste R an A gebunden sind, diese gleich oder unterschiedlich sein können.

10. Verfahren gemäß Anspruch 9, **dadurch gekennzeichnet, dass** das in den Teilchen B) enthaltene leitfähige Polymer Poly(3,4-ethylendioxythiophen) ist.

11. Verfahren gemäß wenigstens einem der Ansprüche 1 bis 10; **dadurch gekennzeichnet, dass** die Teilchen B) zusätzlich wenigstens ein polymeres Anion enthalten.

12. Verfahren gemäß Anspruch 11, **dadurch gekennzeichnet, dass** das polymere Anion ein Anion einer polymeren Carbon- oder Sulfonsäure, bevorzugt Polystyrolsulfonsäure ist.

13. Verfahren gemäß wenigstens einem der Ansprüche 1 bis 12, **dadurch gekennzeichnet, dass** die Dispersion A) als Dispersionsmittel D) organische Lösungsmitteln, Wasser oder Mischungen aus organischem Lösungsmittel und Wasser enthält.

14. Verfahren gemäß wenigstens einem der Ansprüche 1 bis 13, **dadurch gekennzeichnet, dass** die Dispersion A) zusätzlich Vernetzer und/oder oberflächenaktive Substanzen und/oder weitere Additive enthält.

15. Verfahren gemäß Anspruch 14, **dadurch gekennzeichnet, dass** die Dispersion A) als weitere Additive ether-, lacton-, amid- oder lactamgruppenhaltige Verbindungen, Sulfone, Sulfoxide, Zucker, Zuckerderivate, Zuckeralkohole, Furanderivate und/oder Di- oder Polyolkohole enthält.

16. Verfahren gemäß wenigstens einem der Ansprüche 1 bis 15, dadurch gekennzeichet, dass die Dispersion A) bei einem pH empfindlichen Dielektrikum auf einen pH Wert von 4 bis 8 eingestellt ist.

17. Verfahren gemäß wenigstens einem der Ansprüche 1 bis 16, **dadurch gekennzeichnet, dass** die Viskosität der Dispersion A) von 1 bis 200 mPa·s, gemessen bei 20°C und einet Scherrate von 100 $s^{-1}$, beträgt.

18. Verfahren gemäß wenigstens einem der Ansprüche bis 17, **dadurch gekennzeichnet, dass** es sich bei dem Elektrodenmaterial des Elektrodenkörpers (2) um ein Ventilmetall oder eine Verbindung mit einem Ventilmetall vergleichbaren elektrischen Eigenschaften handelt.

19. Verfahren gemäß Anspruch 18, **dadurch gekennzeichnet, dass** es sich bei dem Ventilmetall oder bei der Verbindung mit einem Ventilmetall vergleichbaren elektrischen Eigenschaften um Tantal, Niob Aluminium, Titan, Zirkon, Hafnium, Vanadium, eine Legierung oder Verbindung von wenigstens einem dieser Metalle mit anderen Elementen oder NbO öder eine Legierung oder Verbindung von NbO mit anderen Elementen handelt.

20. Verfahren gemäß Anspruch 18 oder 19, **dadurch gekennzeichnet, dass** das Elektrodenmaterial auf Niob oder NbO basiert.

21. Verfahren gemäß Anspruch 20, **dadurch gekennzeichnet, dass** es sich bei dem Elektrodenmaterial, das auf Niob oder Nioboxid basiert, um Niob, NbO, ein Nioboxid $NbO_x$, wobei x Werte von 0,8 bis 1,2 annehmen kann, Niobnitrid, Nioboxynitrid oder Mischungen dieser Materialien oder um eine Legierung oder Verbindung von wenigstens einem dieser Materialien mit anderen Elementen handelt.

22. Verfähren gemäß wenigstens einem der Ansprüche 1 bis 21, **dadurch gekennzeichnet, dass** es sich bei dem Dielektrikum um ein Oxid des Ventilmetalls oder ein Oxid der Verbindung mit einem Ventilmetall vergleichbaren elektrischen Eigenschaften handelt.

23. Verfahren gemäß wenigstens einem der Ansprüche 1 bis 22, **dadurch gekennzeichnet, dass** das Aufbringen der Dispersion A) und das wenigstens teilweise Entfernen und/oder Aushärten des Dispersionsmittels mehrfach erfolgt.

24. Verfahren gemäß wenigstens einem der Ansprüche 1 bis 23, **dadurch gekennzeichnet, dass** nach Aufbringen der Dispersion A) die Teilchen B) des leitfähigen Polymers, die sich auf der äußeren Oberfläche des mit einem Dielektrikum bedeckten Elektrodenkörpers befinden, wenigstens teilweise entfernt werden.

25. Verfahren gemäß wenigstens einem der Ansprüche 1 bis 24, **dadurch gekennzeichnet, dass** nach Aufbringen der Dispersion A) und Bildung des Feststoffelektrolyten der Kondensator gegebenenfalls mit weiteren elektrisch leitfähigen Außenkontakten (5, 6, 8) versehen, gegebenenfalls kontaktiert und verkapselt wird.

**Claims**

1. Process for the production of an electrolyte capacitor, comprising at least the steps

a) a porous electrode body (2) of an electrode material is subjected to anodic oxidation for the formation of a

dielectric (3) which covers the surface of this electrode material,
b) a dispersion A),
which contains at least particles B) of an electrically conductive polymer and a dispersing agent D),
is applied on to the porous body at least comprising the porous electrode body (2) of the electrode material and the dielectric (3),
c) and for the formation of a solid electrolyte (4) which completely or partially covers the dielectric surface, the dispersion agent D) is at least partially removed and/or cured,

**characterized in that** the maximum anodizing voltage during the anodic oxidation of the porous electrode body (2) is greater than 30 V and the particles B) of the conductive polymer in the dispersion A) have an average diameter, determined by means of ultracentrifuge measurement, of from 1 to 100 nm.

**2.** Process according to claim 1, **characterized in that** dispersions A) the films of which have a specific electrical conductivity in the dried state of greater than 10 S/cm are employed.

**3.** Process according to at least one of claims 1 to 2, **characterized in that** the particles B) of the conductive polymer in the dispersion A) have a $d_{90}$ value of the diameter distribution, which means that 90 % of the total weight of all particles B) of the conductive polymer in the dispersion A) can be assigned to those particles which have a diameter of less than or equal to the $d_{90}$ value, of less than 150 nm.

**4.** Process according to at least one of claims 1 to 3, **characterized in that** the particles B) of the conductive polymer in the dispersion A) have a $d_{10}$ value of the diameter distribution, which means that 10 % of the total weight of all particles B) of the conductive polymer in the dispersion A) can be assigned to those particles which have a diameter of less than or equal to the $d_{90}$ value, of greater than 1 nm.

**5.** Process according to at least one of claims 1 to 4, **characterized in that** the dispersion A) has a content of metal cations of less than 5,000 mg/kg.

**6.** Process according to at least one of claims 1 to 5, **characterized in that** the dispersion A) has a content of transition metals of less than 1,000 mg/kg.

**7.** Process according to at least one of claims 1 to 6, **characterized in that** the dispersion A) has an iron content of less than 1,000 mg/kg.

**8.** Process according to at least one of claims 1 to 7, **characterized in that** the particles B) of the electrically conductive polymer contain at least one polythiophene, polypyrrole or polyaniline, which are optionally substituted.

**9.** Process according to claim 8, **characterized in that** the particles B) of the electrically conductive polymer contain at least one polythiophene with recurring units of the general formula (I) or of the formula (II) or recurring units of the general formulae (I) and (II)

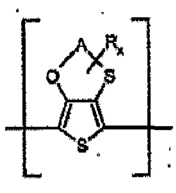 (I) 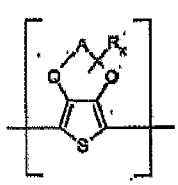 (II)

wherein

A represents an optionally substituted $C_1$-$C_5$-alkylene radical,
R represents a linear or branched, optionally substituted $C_1$-$C_{18}$-alkyl radical, an optionally substituted $C_5$-$C_{12}$-cycloalkyl radical, an optionally substituted $C_6$-$C_{14}$-aryl radical, an optionally substituted $C_7$-$C_{18}$aralkyl radical, an optionally substituted $C_1$-$C_4$-hydroxyalkyl radical or a hydroxyl radical,
x represents an integer from 0 to 8 and

in the case where several radicals R are bonded to A, these can be identical or different.

10. Process according to claim 9, **characterized in that** the conductive polymer contained in the particles B) is poly (3,4-ethylenedioxythiophene).

11. Process according to at least one of claims 1 to 10, **characterized in that** the particles B) additionally contain at least one polymeric anion.

12. Process according to claim 11, **characterized in that** the polymeric anion is an anion of a polymeric carboxylic or sulphonic acid, preferably polystyrenesulphonic acid.

13. Process according to at least one of claims 1 to 12, **characterized in that** the dispersion A) contains organic solvents, water or mixtures of organic solvent and water as the dispersing agent D).

14. Process according to at least one of claims 1 to 13, **characterized in that** the dispersion A) additionally contains crosslinking agents and/or surface-active substances and/or further additives.

15. Process according to claim 14, **characterized in that** the dispersion A) contains as further additives compounds containing ether, lactone, amide or lactam groups, sulphones, sulphoxides, sugars, sugar derivatives, sugar alcohols, furan derivatives and/or di-or polyalcohols.

16. Process according to at least one of claims 1 to 15, **characterized in that** the dispersion A) is adjusted to a pH of from 4 to 8 in the case of a pH-sensitive dielectric.

17. Process according to at least one of claims 1 to 16, **characterized in that** the viscosity of dispersion A) is from 1 to 200 mPa·s, measured at 20 °C and a shear rate of 100 $s^{-1}$.

18. Process according to at least one of claims 1 to 17, **characterized in that** the electrode material of the electrode body (2) is a valve metal or a compound with electrical properties comparable to those of a valve metal.

19. Process according to claim 18, **characterized in that** the valve metal or the compound with electrical properties comparable to those of a valve metal is tantalum, niobium, aluminium, titanium, zirconium, hafnium, vanadium, an alloy or compound of at least one of these metals with other elements or NbO or an alloy or compound of NbO with other elements.

20. Process according to claim 18 or 19, **characterized in that** the electrode material is based on niobium or NbO.

21. Process according to claim 20, **characterized in that** the electrode material which is based on niobium or niobium oxide is niobium, NbO, a niobium oxide $NbO_x$, wherein x can assume values of from 0.8 to 1.2, niobium nitride, niobium oxynitride or mixtures of these materials or an alloy or compound of at least one of these materials with other elements.

22. Process according to at least one of claims 1 to 21, **characterized in that** the dielectric is an oxide of the valve metal or an oxide of the compound with electrical properties comparable to those of a valve metal.

23. Process according to at least one of claims 1 to 22, **characterized in that** the application of the dispersion A) and the at least partial removal and/or curing of the dispersing agent are carried out several times.

24. Process according to at least one of claims I to 23, **characterized in that** after application of the dispersion A), the particles B) of the conductive polymer which are on the outer surface of the electrode body covered with a dielectric are at least partially removed.

25. Process according to at least one of claims 1 to 24, **characterized in that** after application of the dispersion A) and formation of the solid electrolyte, the capacitor is optionally provided with further electrically conductive external contacts (5, 6, 8), optionally contacted and encapsulated.

**Revendications**

1. Procédé de fabrication d’un condensateur électrolytique, comprenant au moins les étapes selon lesquelles :

a) un corps d'électrode poreux (2) d'un matériau d'électrode est soumis à une oxydation anodique pour la formation d'un diélectrique (3) qui recouvre la surface de ce matériau d'électrode,
b) une dispersion A), qui contient au moins des particules B) d'un polymère électriquement conducteur et un milieu de dispersion D), est déposée sur le corps poreux, qui comprend au moins le corps d'électrode poreux (2) du matériau d'électrode et le diélectrique (3),
c) et, pour la formation d'un électrolyte solide (4) qui recouvre entièrement ou partiellement la surface du diélectrique, le milieu de dispersion D) est au moins partiellement retiré et/ou durci,

**caractérisé en ce que** la tension d'anodisation maximale pour l'oxydation anodique du corps d'électrode poreux (2) est supérieure à 30 V et les particules B) du polymère conducteur dans la dispersion A) ont un diamètre moyen, déterminé par une mesure à l'ultracentrifugeuse, de 1 à 100 nm.

2. Procédé selon la revendication 1, **caractérisé en ce que** l'on met en oeuvre des dispersions A) dont les films à l'état sec présentent une conductivité électrique spécifique de plus de 10 S/cm.

3. Procédé selon au moins l'une des revendications 1 à 2, **caractérisé en ce que** les particules B) du polymère conducteur dans la dispersion A) ont une valeur $d_{90}$ de distribution des diamètres inférieure à 150 nm, signifiant que 90 % de la masse totale de toutes les particules B) du polymère conducteur dans la dispersion A) peuvent être affectés aux particules qui ont un diamètre inférieur ou égal à la valeur $d_{90}$.

4. Procédé selon au moins l'une des revendications 1 à 3, **caractérisé en ce que** les particules B) du polymère conducteur dans la dispersion A) ont une valeur $d_{10}$ de distribution des diamètres supérieure à 1 nm, signifiant que 10 % de la masse totale de toutes les particules B) du polymère conducteur dans la dispersion A) peuvent être affectés aux particules qui ont un diamètre inférieur ou égal à la valeur $d_{10}$.

5. Procédé selon au moins l'une des revendications 1 à 4, **caractérisé en ce que** la dispersion A) possède une teneur en cations métalliques inférieure à 5000 mg/kg.

6. Procédé selon au moins l'une des revendications 1 à 5, **caractérisé en ce que** la dispersion A) possède une teneur en métaux de transition inférieure à 1000 mg/kg.

7. Procédé selon au moins l'une des revendications 1 à 6, **caractérisé en ce que** la dispersion A) possède une teneur en fer inférieure à 1000 mg/kg.

8. Procédé selon, au moins l'une des revendications 1 à 7, **caractérisé en ce que** les particules B) du polymère électriquement conducteur contiennent au moins un polythiophène, un polypyrrole ou une polyaniline, qui sont éventuellement substitués.

9. Procédé selon la revendication 8, **caractérisé en ce que** les particules B) du polymère électriquement conducteur comprennent au moins un polythiophène avec des motifs de répétition de formule générale (I) ou de formule (II) ou des motifs de répétition de formules générales (I) et (II) :

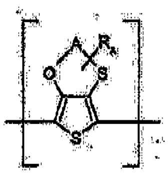 (I) 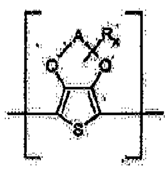 (II)

dans lesquelles

A représente un radical alkylène en $C_1$-$C_5$ éventuellement substitué,
R représente un radical alkyle en $C_1$-$C_{18}$ linéaire ou ramifié, éventuellement substitué, un radical cycloalkyle en $C_5$-$C_{12}$ éventuellement substitué, un radical aryle en $C_6$-$C_{14}$ éventuellement substitué, un radical aralkyle en $C_7$-$C_{18}$ éventuellement substitué, un radical hydroxyalkyle en $C_1$-$C_4$ éventuellement substitué ou un radical hydroxyle,
x représente un nombre entier de 0 à 8, et

dans le cas où plusieurs radicaux R sont liés à A, ceux-ci peuvent être identiques ou différents.

**10.** Procédé selon la revendication 9, **caractérisé en ce que** le polymère électriquement conducteur contenu dans les particules B) est le poly(3,4-éthylènedioxythiophène).

**11.** Procédé selon au moins l'une des revendications 1 à 10, **caractérisé en ce que** les particules B) contiennent en plus au moins un polymère anionique.

**12.** Procédé selon la revendication 11, **caractérisé en ce que** le polymère anionique est un polymère d'un acide carboxylique ou sulfonique, de préférence d'acide polystyrènesulfonique.

**13.** Procédé selon au moins l'une des revendications 1 à 12, **caractérisé en ce que** la dispersion A) contient comme milieu de dispersion D) des solvants organiques, de l'eau ou des mélanges de solvants organiques et d'eau.

**14.** Procédé selon au moins l'une des revendications 1 à 13, **caractérisé en ce que** la dispersion A) contient en plus des réticulants et/ou des substances tensioactives et/ou d'autres additifs.

**15.** Procédé selon la revendication 14, **caractérisé en ce que** la dispersion A) contient comme autres additifs des composés comprenant des groupes éther, lactone, amide ou lactame, des sulfones, des sulfoxydes, du sucre, des dérivés de sucre, des alcools de sucre, des dérivés de furane et/ou des di- ou polyalcools.

**16.** Procédé selon au moins l'une des revendications 1 à 15, **caractérisé en ce que** la dispersion A) est ajustée à un pH de 4 à 8 pour un diélectrique sensible au pH.

**17.** Procédé selon au moins l'une des revendications 1 à 16, **caractérisé en ce que** la viscosité de la dispersion A) est de 1 à 200 mPa.s, mesurée à 20°C et à une vitesse de cisaillement de 100 $s^{-1}$.

**18.** Procédé selon au moins l'une des revendications 1 à 17, **caractérisé en ce que** le matériau d'électrode du corps d'électrode (2) est un métal de soupape ou une composé ayant des propriétés électriques comparables à celles d'un métal de soupape.

**19.** Procédé selon la revendication 18, **caractérisé en ce que** le métal de soupape ou le composé ayant des propriétés électriques comparables à celles d'un métal de soupape est le tantale, le niobium, l'aluminium, le titane, le zirconium, le hafnium, le vanadium, un alliage ou un composé d'au moins l'un de ces métaux avec d'autres éléments ou le NbO ou un alliage ou composé de NbO avec d'autres éléments.

**20.** Procédé selon la revendication 18 ou 19, **caractérisé en ce que** le matériau d'électrode est à base de niobium ou de NbO.

**21.** Procédé selon la revendication 20, **caractérisé en ce que** le matériau d'électrode qui est à base de niobium ou d'oxyde de niobium est le niobium, le NbO, un oxyde de niobium $NbO_x$, où x peut prendre des valeurs allant de 0,8 à 1,2, le nitrure de niobium, l'oxynitrure de niobium ou des mélanges de ces matériaux ou un alliage ou un composé d'au moins l'un de ces matériaux avec d'autres éléments.

**22.** Procédé selon au moins l'une des revendications 1 à 21, **caractérisé en ce que** le diélectrique est un oxyde de métal de soupape ou un oxyde du composé ayant des propriétés électriques comparables à celles d'un métal de soupape.

**23.** Procédé selon au moins l'une des revendications 1 à 22, **caractérisé en ce que** le dépôt de la dispersion A) et le retrait et/ou durcissement au moins partiel du milieu de dispersion s'effectuent plusieurs fois.

**24.** Procédé selon au moins l'une des revendications 1 à 23, **caractérisé en ce que**, après le dépôt de la dispersion A), les particules B) du polymère conducteur qui se trouvent sur la surface extérieure du corps d'électrode recouvert d'un diélectrique, sont au moins partiellement retirées.

**25.** Procédé selon au moins l'une des revendications 1 à 24, **caractérisé en ce que**, après le dépôt de la dispersion A) et la formation de l'électrolyte solide, le condensateur est doté éventuellement d'autres contacts externes électriquement conducteurs (5, 6, 8), est éventuellement mis en contact et encapsulé.

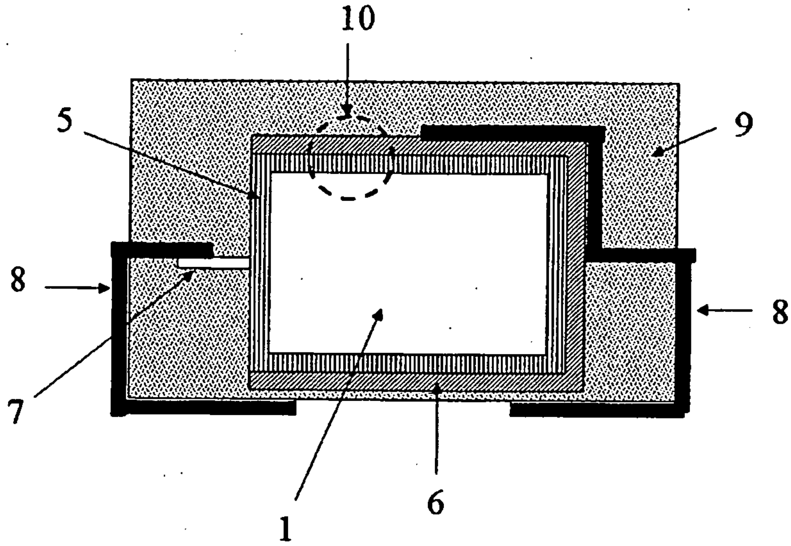


Fig. 1

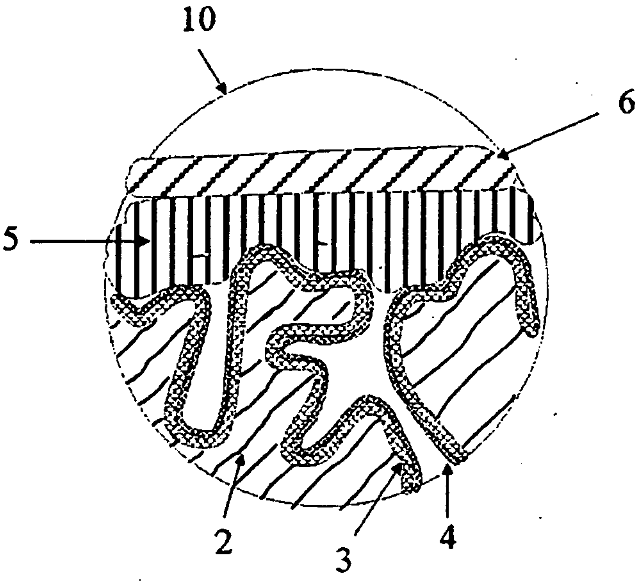


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1498920 A
- EP 340512 A
- EP 899757 A
- EP 440957 A
- US 5300575 A
- DE 19627071 A
- US 6376105 B
- EP 1524678 A
- US 6987663 B


### In der Beschreibung aufgeführte Nicht-Patentliteratur


- *Colloid Polym. Sci.,* 1989, vol. 267, 1113-1116
- **HOUBEN WEYL.** Methoden der organischen Chemie. *Makromolekulare Stoffe,* 1987, vol. E 20, 1141
- **L. GROENENDAAL ; F. JONAS ; D. FREITAG ; H. PIELARTZIK ; J. R. REYNOLDS.** *Adv. Mater.,* 2000, vol. 12, 481-494
- **P. BLANCHARD ; A. CAPPON ; E. LEVILLAIN ; Y. NICOLAS ; P. FRÈRE ; J. RONCALI.** *Org. Lett.,* 2002, vol. 4 (4), 607-609